# EUROPEAN PATENT SPECIFICATION

(11) **EP 1 734 752 B1**
(45) Date of publication and mention of the grant of the patent: **03.07.2013**
(21) Application number: 06010801.6
(22) Date of filing: 19.12.1997
(51) Int. Cl.: H04N 5/445

(54) **EPG with advertising inserts**
Elektronische Programmführer mit Einfügung von Reklame
Guide électronique de programmes (EPG) avec insertion de publicités

(30) Priority: 19.12.1996 US 34784 P
(43) Date of publication of application: 20.12.2006
(62) Divisional of application: 97952633.2
(73) Proprietor: Index Systems Inc, Santa Clara, CA 95050 (US)
(72) Inventor: Yuen, Henry C., Pasadena, California 91102-0438 (US); Mankovitz, Roy J., Montecito,California 93108 (US); Kwoh, Daniel S., La Canada / Flintridge, CA 91101 (US); Leung, Elsie Y., South Pasadena, CA 91030 (US)
(74) Representative: Bryn-Jacobsen, Caelia

(56) References cited:
- WO-A-95/01056
- FR-A1- 2 726 718
- US-A- 5 325 183
- US-A- 5 559 550

## Description

### BACKGROUND

This invention relates to electronic program guides that incorporate advertising messages or words.

As the number of television channels available on cable and by satellite expands, an on-screen electronic program guide (EPG) become more indispensable. Such an EPG permits the user to sort the available present and future programming by theme, time, and channel. As a result, the user can find a program of interest more easily.

It is costly to collect EPG data for display and to transmit such data to the consumer. Thus, there is a need to find a way to recover the cost of these activities.

WO95/01056 discloses a system for selecting audio visual programs and services. In an electronic program guide program listings are arranged which include television programs which may include listing giving access to paid-for commercials and advertising messages.

FR2726718 discloses a device that includes an antenna which receives incoming television display information, advertising and programme information. The information is decoded and passed through a filter which is controlled by a programmer. The filter selects only the type of information required by the viewer. The selected information is then stored in a nonvolatile memory e.g. on a computer disc. A remote control controls the information filtered and the television screen display.

### SUMMARY

The apparatus and method of the invention are recited in accompanying claims 1 and 5.

As disclosed herein, advertisements are inserted in an EPG on the screen of a display monitor between the individual television program listings. Specifically, a memory stores EPG data and advertising data. A microprocessor is programmed to recover EPG data corresponding to a number of television programs and advertising data from the memory. The microprocessor controls the monitor to display the recovered EPG data on the screen in lines of television program listings, each television program listing being displayed in a separate line, and to display the recovered advertising data in a line on the screen instead of one of the television program listings.

In a preferred construction related to the invention, the EPG and advertising data are displayed in a first area of the screen and a detail window is displayed in a second area of the screen. One of the lines of EPG data is highlighted with a cursor. A description of the television program listing highlighted by the cursor is inserted in the second area. When the line of advertising data is highlighted with the cursor, a description relating to the advertising data is inserted in the second area.

### BRIEF DESCRIPTION OF THE DRAWINGS

FIG.1 is a schematic block diagram of apparatus for carrying out the invention; and
FIG.2 is a screen format produced by the apparatus of FIG. 1.

### DETAILED DESCRIPTION OF THE DRAWINGS

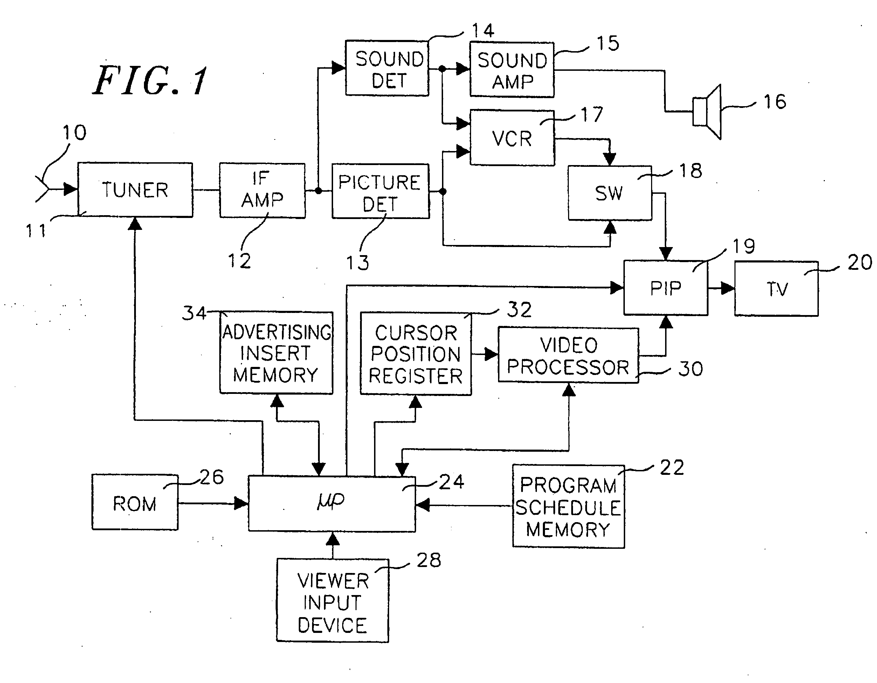

The disclosures of United States patent number 6,239,794 filed on June 7, 1995 and patent number 6,028,599, filed on October 10, 1996 are relevant to the subject matter disclosed herein. As illustrated in the former application, a source of television signals 10 in FIG. 1 such as a terrestrial antenna, or a cable is connected to a television tuner 11. The output of tuner 11 is a modulated intermediate frequency signal containing video and audio television information. Tuner 11 is connected by an intermediate frequency amplifier (IF AMP) 12 to a picture detector (PICTURE DET) 13 and a sound detector (SOUND DET) 14, which produce base band video and audio signals, respectively. The audio signal is coupled by a sound amplifier (SOUND AMP) 15 to a loudspeaker 16. The video signal is coupled by a video amplifier not shown to one input of a switch 18. Sound detector 14 and picture detector 13 are connected to the audio and video inputs, respectively, of a video cassette recorder (VCR) 17. (Alternatively, television signal source 10 could be directly connected to the RF input of VCR 17, if its internal tuner and demodulating circuitry is to be utilized.) The output of VCR 17 is connected to the other input of switch 18. The output of switch 18 is connected to one input of a conventional picture-in-picture (PIP) integrated circuit chip 19. The output of PIP chip 19 is connected to the video input of a television receiver or monitor (TV) 20 having a screen (not shown).

An updatable data base of the schedule of program listings of all the available channels for a prescribed period of time, e.g. a day or a week, is electronically stored in a program schedule memory 22. These program listings typically include for each program the title, a program description, the day of the week, the start time of the day, the program length, and the channel on which the program is transmitted and thus available for reception at source 10. In a preferred embodiment of the invention, the period of time for which the program listings are stored is different for the guides, depending upon viewer priorities and preferences. For example, the information needed to display the TISPG and CSPG may be stored for one or two days and the information needed to display the TSPG may be stored for a week or more. The data base can be updated by a continuous data link in the vertical blanking interval (VBI) of one television channel broadcast to the television receiver in well known fashion. Alternatively, the data base can be updated by unplugging memory 22 and replacing it with a memory having the updated data base. Memory 22 is connected to a microprocessor 24 that is programmed to control the operation of the described equipment An operating program for microprocessor 24 is stored in a read only memory (ROM) 26. A viewer input device 28, preferably in the form of a remote IR controller, is coupled to microprocessor 24 to provide commands from the viewer. A video processor 30 is coupled to microprocessor 24. When the viewer wishes to see television program listings, microprocessor 24 recalls a portion of the program schedule data base from memory 22 and couples it to video processor 30, where the program listings are formatted for display. Preferably, the information stored in video processor 30 is a bit map of what is displayed on the screen of television receiver 20. Video processor 30 is connected to the other input of PIP chip 19. Preferably, viewer input device 28 controls microprocessor 24 by cursor movement on the screen of television receiver 20. To this end, microprocessor 24 and video processor 30 are coupled to a cursor position register 32. (Alternatively, the viewer can select items of information displayed on the screen by keying into viewer input device 28 code numbers assigned to these items.) Microprocessor 24 is also coupled to tuner 11 for channel change, to VCR 17 for play/record selection and start/stop, to switch 18 for selection of one of its inputs, and to PIP chip 19 for selection of the mode of PIP operation.

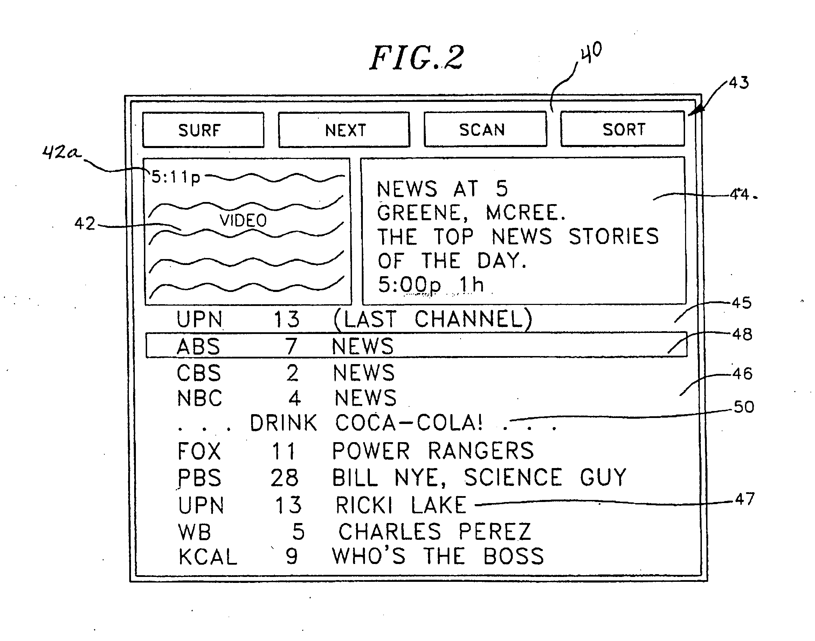

The format of the electronic program guide is shown in FIGS. 2. The format has a background area 40 and an overlaid PIP window 42 in the upper left-hand corner of the screen. The real time, i.e., 5:11 p.m., is displayed in a sub-area 42a of PIP window 42. Background area 40 includes a banner and message prompting area 43 at the top of the screen, a program description area 44 in the upper right-hand corner of the screen adjacent to PIP window 42, and a program schedule area 46 below areas 42 and 44. Program description area 44 includes the start time and length (duration) of the program being described. In area 46, EPG data retrieved from memory 22 is displayed in lines, each program listing being displayed in a separate line. The viewer can move a cursor 48 vertically to highlight one of the lines of program listings displayed in area 46. The highlighted background of cursor 48 and the background of program description area 44 are preferably the same color or shade. The complete, moving images of a currently broadcast television program in real time and the current time are displayed in PIP window 42 and the audio portion of the television program displayed in PIP window 42 is reproduced by the sound system of monitor 20.

Advertising inserts are displayed on the screen between the lines of program listings in program schedule area 46 and related information or announcements are displayed in description area 44. With reference to FIG. 1, the advertising inserts are preferably transmitted in the VBI as part of the program schedule information and stored at the television receiver in RAM, represented functional as an advertising insert memory 34. Preferably the inserts are transmitted as part of the packets of information about the programs, i.e., SIPs, with which the advertising inserts are displayed. The apparatus of FIG. 1 functions as described in 08/475,395, the advertising inserts being treated as part of the program listings displayed in area 46 and the brief program descriptions displayed in area 44.

In practice, memory 34 and memory 22 could be physically incorporated in a single RAM. Addresses for the advertising inserts could be stored as part of the pre-established time lists for the programs with which the advertising inserts are displayed. Thus, the addresses link the time lists to the advertising inserts, and each advertising insert is only stored once in memory 34. By linking the advertising inserts to the time lists, the displayed advertising insert becomes time dependent. Thus, the content of the displayed advertisements can, to some extent, be directed to the interests of the viewers. Advertisements of interest to housewives would be displayed in the morning and advertisements of interest to children would be displayed in the early evening.

As illustrated in FIG. 2, an advertising insert 50 is preferably displayed as a line below the listing, "NBC 4 NEWS" of the television program that the advertiser, e.g., Coca Cola, sponsors. However, it is not necessary that there be a relationship between the position of the advertiser and the television program, depending on the circumstances. To obtain more information about the subject of advertising insert 50, the viewer highlights the line with cursor 48; then such information is displayed in area 44, instead of information about a television program. For example, the announcement in area 44 could inform the viewer that the advertised product is on sale in articular retail establishment at a particular price or give an more detailed product description.

## Claims

1. Apparatus for displaying advertisements (50) in an electronic program guide, comprising:
a memory (22; 34) for storing advertising data only once and electronic program guide (EPG) data including a schedule of television program listings for all available channels for a prescribed period of time and an address for linking the advertising data with the schedule of television program listings, wherein the address for linking the advertising data is stored as part of the schedule of television program listings;
a display monitor (20) having a screen;
means (24) for accessing the memory to recover EPG data corresponding to the schedule of television program listings and the address for linking the advertising data with the schedule of television program listings;
means (30) for displaying the recovered EPG data on the screen in lines of television program listings, each television program listing being displayed in a separate line;
means (24) for accessing the memory to recover the advertising data according to the recovered address; and
means for displaying the recovered advertising data in a line on the screen instead of one of the television program listings, or between the television program listings.

2. Apparatus as claimed in claim 1, in which the advertising data is displayed as an insert (50) between lines of television program listings.

3. The apparatus of claim 1, in which the EPG data is displayed in a first area (46) of the screen, the apparatus additionally comprising:
means (32) for highlighting one of the lines of EPG data on the screen with a cursor;
means for displaying a detail window in a second area (44) of the screen; and
means for inserting a description of the television program listing highlighted by the cursor in the second area.

4. The apparatus of claim 3, additionally comprising:
means for highlighting the advertising data on the screen with a cursor; and
means for inserting information relating to the advertising data highlighted by the cursor in the second area.

5. A method for displaying advertisements (50) in an electronic program guide, comprising:
storing in memory (22;34) advertising data only once and electronic program guide (EPG) data including a schedule of television program listings for all available channels for a prescribed period of time and an address for linking the advertising data with the schedule of television program listings, wherein the address for linking the advertising data is stored as part of the schedule of television program listings;
accessing the memory to recover the EPG data corresponding to the schedule of television program listings and the address for linking the advertising data with the schedule of television program listings;
displaying the recovered EPG data on a screen (20) in lines of television program listings, each television program listing being displayed in a separate line;
accessing the memory to recover the advertising data according to the recovered address; and
displaying the recovered advertising data in a line on the screen instead of one of the television program listings, or between the television program listings.

6. A method as claimed in claim 5 in which the advertising data is displayed as an insert (50) between lines of television program listings.

## Patentansprüche

1. Vorrichtung zum Anzeigen von Werbung (50) in einem elektronischen Programmführer, mit:
einem Speicher (22; 34) zum nur einmaligen Speichern von Werbedaten und elektronischen Programmführerdaten einschließlich eines Plans von Fernsehprogrammlisten für alle verfügbaren Kanäle für einen vorgegebenen Zeitraum und einer Adresse zum Verknüpfen der Werbedaten mit dem Plan von Fernsehprogrammlisten, wobei die Adresse zum Verknüpfen der Werbedaten als Teil des Plans von Fernsehprogrammlisten gespeichert wird;
einem Anzeigemonitor (20) mit einem Bildschirm;
Mitteln (24) zum Zugreifen auf den Speicher, um elektronische Programmführerdaten, die dem Plan von Fernsehprogrammlisten entsprechen, und die Adresse zum Verknüpfen der Werbedaten mit dem Plan von Fernsehprogrammlisten abzurufen;
Mitteln (30) zum Anzeigen der abgerufenen elektronischen Programmführerdaten auf dem Bildschirm in Zeilen von Fernsehprogrammlisten, wobei jede Fernsehprogrammliste in einer separaten Zeile angezeigt wird;
Mitteln (24) zum Zugreifen auf den Speicher, um die Werbedaten gemäß der abgerufenen Adresse abzurufen; und
Mitteln zum Anzeigen der abgerufenen Werbedaten in einer Zeile auf dem Bildschirm anstelle einer der Fernsehprogrammlisten, oder zwischen den Fernsehprogrammlisten.

2. Vorrichtung nach Anspruch 1, wobei die Werbedaten als Einfügung (50) zwischen Zeilen von Fernsehprogrammlisten angezeigt werden.

3. Vorrichtung nach Anspruch 1, wobei die elektronischen Programmführerdaten in einem ersten Bereich (46) des Bildschirms angezeigt werden, wobei die Vorrichtung zusätzlich aufweist:
Mittel (32) zum Hervorheben einer der Zeilen elektronischer Programmführerdaten auf dem Bildschirm mit einem Cursor;
Mittel zum Anzeigen eines Detailfensters in einem zweiten Bereich (44) des Bildschirms; und
Mittel zum Einfügen einer Beschreibung der von dem Cursor hervorgehobenen Fernsehprogrammliste in dem zweiten Bereich.

4. Vorrichtung nach Anspruch 3, die zusätzlich aufweist:
Mittel zum Hervorheben der Werbedaten auf dem Bildschirm mit einem Cursor; und
Mittel zum Einfügen von Informationen, die sich auf die von dem Cursor hervorgehobenen Werbedaten beziehen, in dem zweiten Bereich.

5. Verfahren zum Anzeigen von Werbung (50) in einem elektronischen Programmführer, das umfasst:
nur einmaliges Speichern von Werbedaten und Speichern von elektronischen Programmführerdaten einschließlich eines Plans von Fernsehprogrammlisten für alle verfügbaren Kanäle für einen vorgegebenen Zeitraum und einer Adresse zum Verknüpfen der Werbedaten mit dem Plan von Fernsehprogrammlisten in einem Speicher (22; 34), wobei die Adresse zum Verknüpfen der Werbedaten als Teil des Plans von Fernsehprogrammlisten gespeichert wird;
Zugreifen auf den Speicher, um die elektronischen Programmführerdaten, die dem Plan von Fernsehprogrammlisten entsprechen, und die Adresse zum Verknüpfen der Werbedaten mit dem Plan von Fernsehprogrammlisten abzurufen;
Anzeigen der abgerufenen elektronischen Programmführerdaten auf einem Bildschirm (20) in Zeilen von Fernsehprogrammlisten, wobei jede Fernsehprogrammliste in einer separaten Zeile angezeigt wird;
Zugreifen auf den Speicher, um die Werbedaten gemäß der abgerufenen Adresse abzurufen; und
Anzeigen der abgerufenen Werbedaten in einer Zeile auf dem Bildschirm anstelle einer der Fernsehprogrammlisten, oder zwischen den Fernsehprogrammlisten.

6. Verfahren nach Anspruch 5, wobei die Werbedaten als Einfügung (50) zwischen Zeilen von Fernsehprogrammlisten angezeigt werden.

## Revendications

1. Appareil pour afficher des messages publicitaires (50) dans un guide électronique de programmes, comprenant :
une mémoire (22 ; 34) pour stocker des données publicitaires une fois seulement et des données de guide électronique de programmes (EPG) comprenant une grille de listages de programmes de télévision pour toutes les chaînes disponibles pendant une période prescrite et une adresse pour lier les données publicitaires à la grille de listages de programmes de télévision, dans lequel l'adresse pour lier les données publicitaires est stockée en tant que partie de la grille de listages de programmes de télévision ;
un moniteur d'affichage (20) comportant un écran ;
des moyens (24) pour accéder à la mémoire pour récupérer des données d'EPG correspondant à la grille de listages de programmes de télévision et l'adresse pour lier les données publicitaires à la grille de listages de programmes de télévision ;
des moyens (30) pour afficher les données d'EPG récupérées sur l'écran dans des lignes de listages de programmes de télévision, chaque listage de programmes de télévision étant affiché dans une ligne séparée ;
des moyens (24) pour accéder à la mémoire pour récupérer les données publicitaires selon l'adresse récupérée ; et
des moyens pour afficher les données publicitaires récupérées dans une ligne sur l'écran au lieu d'un des listages de programmes de télévision, ou entre les listages de programmes de télévision.

2. Appareil selon la revendication 1, dans lequel les données publicitaires sont affichées sous forme d'insertion (50) entre des lignes de listages de programmes de télévision.

3. Appareil de la revendication 1, dans lequel les données d'EPG sont affichées dans une première zone (46) de l'écran, l'appareil comprenant en outre :
des moyens (32) pour mettre en évidence une des lignes de données d'EPG sur l'écran avec un curseur ;
des moyens pour afficher une fenêtre de détail dans une seconde zone (44) de l'écran ; et
des moyens pour insérer une description du listage de programmes de télévision mis en évidence par le curseur dans la seconde zone.

4. Appareil de la revendication 3, comprenant en outre :
des moyens pour mettre en évidence les données publicitaires sur l'écran avec un curseur ; et
des moyens pour insérer des informations concernant les données publicitaires mises en évidence par le curseur dans la seconde zone.

5. Procédé pour afficher des messages publicitaires (50) dans un guide électronique de programmes, comprenant :
le stockage, dans une mémoire (22 ; 34), de données publicitaires une fois seulement et de données de guide électronique de programmes (EPG) comprenant une grille de listages de programmes de télévision pour toutes les chaînes disponibles pendant une période prescrite et une adresse pour lier les données publicitaires à la grille de listages de programmes de télévision, dans lequel l'adresse pour lier les données publicitaires est stockée en tant que partie de la grille de listages de programmes de télévision ;
l'accès à la mémoire pour récupérer les données d'EPG correspondant à la grille de listages de programmes de télévision et l'adresse pour lier les données publicitaires avec la grille de listages de programmes de télévision ;
l'affichage des données d'EPG récupérées sur un écran (20) dans des lignes de listages de programmes de télévision, chaque listage de programmes de télévision étant affiché dans une ligne séparée ;
l'accès à la mémoire pour récupérer les données publicitaires selon l'adresse récupérée ; et
l'affichage des données publicitaires récupérées dans une ligne sur l'écran au lieu d'un des listages de programmes de télévision, ou entre les listages de programmes de télévision.

6. Procédé selon la revendication 5, dans lequel les données publicitaires sont affichées sous forme d'insertion (50) entre des lignes de listages de programmes de télévision.
